# FASCICULE DE BREVET EUROPEEN

(11) **EP 4 063 163 B1**
(45) Date de publication et mention de la délivrance du brevet: **18.09.2024**
(21) Numéro de dépôt: 22163011.4
(22) Date de dépôt: 18.03.2022
(51) Int. Cl.: B60K 7/00, B60K 17/04, B60K 17/30, B60K 11/06, B60T 1/06, B60T 13/74, F16D 65/18, F16D 121/18, H02K 1/27, H02K 7/00, H02K 7/116, H02K 7/14

(54) **ROUE MOTORISÉE ÉLECTRIQUEMENT POUR PLATEFORME MOBILE**
ELEKTRISCH ANGETRIEBENES RAD FÜR MOBILE PLATTFORM
ELECTRICALLY MOTORISED WHEEL FOR A MOBILE PLATFORM

(30) Priorité: 24.03.2021 FR 2102971
(43) Date de publication de la demande: 28.09.2022
(73) Titulaire: Jnov Tech, 31480 Caubiac (FR)
(72) Inventeur: DUPEYRON, Nicolas, 31480 CAUBIAC (FR)
(74) Mandataire: Argyma

(56) Documents cités:
- EP-A1- 3 778 281
- WO-A1-2014/097927
- CN-U- 210 617 839

## Description

### [Domaine technique]

La présente invention se rapporte au domaine des plateformes mobiles et concerne plus particulièrement une roue motorisée électrique pour plateforme mobile, notamment pour plateforme mobile de manutention, de travail ou d'accès.

### [Etat de la technique antérieure]

Dans l'industrie, il est connu d'utiliser des plateformes mobiles munies de roues pour réaliser un certain nombre de tâches. Par exemple, il est connu d'utiliser des chariots à roues, des postes de travail à roues, des plateformes d'accès à roues, par exemple pour avion, des robots de manutention à roues, etc. Plus généralement, parmi ces plateformes mobiles, on distingue notamment les plateformes motorisées (Self Propelled Modular Transporters ou SPMT), les véhicules guidés automatiquement (Automated Guided Vehicles ou AGV), les véhicules guidés manuellement (Manually Guided Vehicles ou MGV) et les robots mobiles autonomes (Autonomous Mobile Robots ou AMR).

A titre d'exemple, dans le domaine de la manutention, il est connu d'utiliser des plateformes mobiles, notamment robotisées, pour soulever ou déplacer des charges lourdes. De manière connue, une telle plateforme comporte des roues motorisées électriquement, par exemple deux ou quatre, équipées ou non d'un système de direction.

Plus la plateforme mobile est compacte, plus elle peut se glisser facilement sous une charge et tourner sur une surface réduite afin de déplacer ladite charge de manière précise, notamment dans des couloirs étroits. Or, les plateformes mobiles existantes présentent souvent des dimensions trop importantes pour manoeuvrer des charges lourdes, par exemple de plusieurs tonnes, sur des surfaces réduites, par exemple de l'ordre de quelques mètres carrés ou dans des passages étroits, tels que des couloirs, dont la largeur est par exemple inférieure à 1 m.

En outre, la hauteur importante des plateformes mobiles existantes empêche en général de les glisser sous des charges lourdes existantes pour les soulever. Cela est en partie dû à leurs roues motorisées qui ne sont pas suffisamment compactes.

Parmi les roues motorisées électriquement, on distingue les roues unitaires motorisées électriquement et les ensembles de roues motorisées électriquement. Une roue unitaire motorisée électriquement peut être uniquement motrice ou bien à la fois motrice et directrice.

Les documents CN105751892, CN210617839 et CN103895695 décrivent une roue unitaire motorisée électriquement à la fois motrice et directrice. Dans ces solutions, les roues motrices et directrices sont conçues en intégrant un plateau tournant motorisé à couronne positionné au-dessus de la roue motrice. La roue motrice doit avoir un diamètre et une largeur de bandage suffisamment importants pour supporter à elle seule la totalité de la charge. Ce type de solution augmente l'encombrement en hauteur à cause de l'empilement du système de traction et de direction. De plus, la direction s'effectue par dérapage (ou « ripage ») du bandage de roue sur le sol, ce qui réduit fortement la précision de déplacement nécessaire aux plateformes mobiles, notamment robotisées, et à toute opération de positionnement. Ce type de solution est la plus exploitée par les industriels.

Le document CN110316279 décrit un ensemble à deux roues motrices reliées par un différentiel et dont la direction se fait par une couronne dentée motorisée. Dans cette solution, le moteur est placé à 90° avec un réducteur à renvoi d'angle et le système d'engrenage est placé au-dessus du moteur, ce qui est encombrant.

Le document US7159677 décrit un ensemble à double roue motrice pour fauteuil d'handicapé. Dans cette solution, le moteur est placé entre les deux roues, ce qui est encombrant. De plus, un tel ensemble n'est pas adapté pour être monté sur une plateforme mobile de manutention, de travail ou d'accès.

Le document CN105292971 décrit un ensemble directeur à double roue motrice. Dans cette solution, deux roues motrices sont montées en vis à vis entre un plateau rotatif non motorisé, la direction se faisant par différentiel de vitesse entre les deux roues. Cette solution a pour avantage de réduire fortement la hauteur du système et d'améliorer grandement la précision de déplacement en limitant le dérapage de roues lors du changement de direction. Elle a pour inconvénient d'augmenter fortement la largeur du système à cause de l'empilement des deux roues motrices qui ne sont pas suffisamment compactes. Cet inconvénient la rend actuellement peu exploitable par les industriels.

Par ailleurs, il est nécessaire d'utiliser un organe de freinage, notamment pour le service et le parking, afin de garantir la sécurité des biens et des personnes. Cependant, dans les solutions existantes, un tel organe de freinage est généralement agencé en regard du moteur, ce qui augmente le volume de la roue ou de l'ensemble de roues.

Il existe donc un besoin d'une solution compacte et performante de roue motorisée permettant de remédier au moins en partie à ces inconvénients.

### [Exposé de l'invention]

A cette fin, un des buts de l'invention est de proposer une roue motorisée compacte et précise permettant de réduire la taille des plateformes mobiles tout en augmentant la précision de leur mobilité. Un autre but de l'invention est de proposer un ensemble de roues comprenant au moins deux roues motorisées permettant de rendre ledit ensemble à la fois moteur et directeur.

A cette fin, l'invention a tout d'abord pour objet une roue motorisée pour plateforme mobile, ladite roue comprenant :
- un moyeu monobloc comprenant un premier logement de forme cylindrique définissant un premier espace intérieur et un deuxième logement de forme cylindrique s'étendant de manière coaxiale au premier logement et définissant un deuxième espace intérieur communicant avec le premier espace intérieur, le premier logement étant adapté pour être fixé sur la plateforme,
- un arbre d'entrainement disposé de manière coaxiale avec le premier logement et le deuxième logement,
- un agencement de moteur logé, de préférence intégralement, dans ledit premier espace intérieur, comprenant un moteur annulaire sans balais relié audit arbre d'entrainement et adapté pour générer un couple d'entrainement en rotation dudit arbre et un organe de freinage, ledit moteur annulaire comprenant un corps de moteur, un stator de forme annulaire monté sur ledit corps de moteur coaxialement par rapport à l'arbre d'entrainement et comportant une pluralité de bobinages et un rotor de forme cylindrique monté solidairement et coaxialement sur l'arbre via un disque de rotor de manière mobile par rapport au stator afin d'entrainer l'arbre en rotation lorsque les bobinages du stator sont alimentés par un courant électrique, ledit organe de freinage du rotor étant monté autour de l'arbre d'entrainement de manière coaxiale avec ledit arbre d'entrainement à l'intérieur du moteur annulaire en étant contenu dans l'épaisseur de l'agencement de moteur,
- un capteur monté sur le corps du moteur et un aimant monté sur l'extrémité de l'arbre, ledit capteur étant configuré pour déterminer la position angulaire de l'arbre d'entrainement à partir dudit aimant afin de piloter la roue,
- un mécanisme de transmission logé, de préférence intégralement, dans le deuxième espace intérieur, relié solidairement à l'arbre et comprenant un ensemble réducteur de vitesse adapté pour recevoir le couple d'entrainement en rotation de l'arbre afin d'en réduire la vitesse tout en en augmentant le couple,
- un système de guidage en rotation monté de manière mobile en rotation autour du deuxième logement,
- au moins un organe de roulage comprenant une jante montée sur ledit système de guidage en rotation, un bandage monté sur ladite jante afin de permettre le roulage de la roue sur le sol et un flasque solidaire à la fois de la jante et du mécanisme de transmission afin de transmettre le couple augmenté reçu du mécanisme de transmission à l'organe de roulage, la largeur de la jante et du bandage étant inférieure ou égale à la longueur du deuxième logement.

Une telle architecture rend la roue particulièrement compacte, notamment en largeur. Notamment, l'intégration des fonctions de réduction de vitesse et de guidage en rotation de la roue en parallèle dans la largeur du bandage d'une part et l'intégration des fonctions de motorisation et de freinage en parallèle dans la largeur d'autre part permettent de minimiser leur encombrement et de rendre la roue très compacte. Notamment, l'agencement du stator/rotor moteur étant de type annulaire, car cela permet de rendre la roue particulièrement compacte en largeur, d'avoir un fort couple du fait de son grand diamètre et de disposer d'un espace intérieur suffisant pour loger l'organe de freinage. De plus, une telle architecture permet la suppression de l'accouplement et du palier intermédiaire entre le moteur et le réducteur, ce qui réduit significativement l'épaisseur du système. Ensuite, le nombre limité de composants permet de satisfaire les exigences de poids et d'encombrement. Notamment, la compacité apportée par l'agencement des composants de la roue permet d'utiliser des matériaux de faible résistance mécanique, notamment des matériaux légers tels que par exemple un alliage d'aluminium, pour certaines pièces telles que le moyeu et/ou le corps de moteur, rendant ainsi la roue compacte. Ensuite, les composants de la roue et leur agencement relatif permet à la roue de s'adapter à une pluralité de charges, notamment des charges allant de plusieurs centaines de kilogrammes à plusieurs tonnes, par exemple de 100 kilogrammes à 10 tonnes. La roue selon l'invention, notamment le couple important fourni par le mécanisme de transmission (effort de traction), permet à la roue de s'adapter à différents types de sol (béton, bitume...), à différents états du sol (humidité, température, projections d'eau, ...), à différentes géométries du sol (pente, défauts, ...). L'organe de freinage permet notamment le freinage de service et de parking pour garantir la sécurité des biens et des personnes.

Selon un aspect de l'invention, le stator et le rotor sont agencés de sorte que le flux électromagnétique généré par le stator et le rotor en rotation n'interfère pas avec le flux électromagnétique généré par l'organe de freinage. Par exemple, l'ensemble stator/rotor peut être à flux radial et l'organe de freinage à flux axial ou bien l'ensemble stator/rotor et l'organe de freinage peuvent être tous deux à flux axial.

De préférence, l'ensemble stator/rotor et l'organe de freinage sont séparés d'une distance d'au moins 5 mm afin d'éviter les interférences entre leurs champs électromagnétiques.

De préférence encore, l'ensemble stator/rotor et l'organe de freinage sont séparés du capteur d'une distance d'au moins 10 mm afin d'éviter les interférences entre leurs champs électromagnétiques.

De préférence, le corps de moteur, le disque de rotor et l'arbre d'entrainement sont réalisés en un matériau amagnétique afin de ne pas permettre au flux électromagnétique généré par le stator et le rotor en rotation et/ou au flux électromagnétique généré par l'organe de freinage d'interférer avec les mesures du capteur.

Selon un aspect de l'invention, le moteur sans balais (ou « brushless ») est de type moteur synchrone à aimants permanents (PMSM ou BLDC), qui permet d'atteindre des performances de positionnement élevé. En effet, un tel moteur permet de disposer d'un couple très important pour le passage d'obstacles, d'une très grande plage de vitesses d'utilisation et d'un rendement élevé parfait pour une roue compacte, fonctionnant notamment sur batterie. Un tel moteur peut fonctionner dans les quatre quadrants, ce qui permet de réaliser la fonction de freinage de service nécessaire aux plateformes mobiles. De plus, la régénération d'énergie permet de recharger les batteries.

Selon une caractéristique de l'invention, l'organe de freinage est contenu intégralement dans l'espace intérieur du stator afin de réduire l'encombrement de l'ensemble formé par le moteur et l'organe de freinage, rendant ainsi la roue plus compacte.

Selon une caractéristique de l'invention, l'organe de freinage est un frein électromagnétique à aimant permanent, ce qui procure un freinage de sécurité à manque d'énergie, qui est une technologie compacte à fort couple de freinage, sans entretien et pouvant fonctionner dans une plage de température élevée.

De manière préférée, l'agencement de moteur comprend un corps qui se présente sous la forme d'une pièce métallique monobloc, de préférence en alliage d'aluminium, comportant une embase, présentant une forme d'anneau, et une portion de support cylindrique dont l'axe longitudinal est confondu avec l'axe de révolution de l'embase, le stator étant monté autour de la portion de support et l'organe de freinage étant monté dans la portion de support. Un tel corps permet de monter aisément le stator, le rotor et l'organe de freinage en parallèle dans un espace de taille réduite.

Dans une forme de réalisation, l'agencement de moteur comprend un rotor externe et un stator interne annulaire. Cette conception permet d'obtenir un fort couple car les aimants du rotor sont positionnés à l'extérieur du stator sur un grand diamètre. Il dispose en plus d'un grand espace intérieur, utile pour le logement du frein. Il est très compact en épaisseur ce qui permet de réduire l'encombrement de la roue motrice.

Dans une autre forme de réalisation, l'agencement de moteur comprend un rotor interne annulaire et un stator externe. Cette disposition permet de fixer directement le stator sur le moyeu et donc de faciliter la dissipation thermique.

Selon une caractéristique de l'invention, le mécanisme de transmission comprend un ensemble réducteur de vitesse adapté pour recevoir le couple d'entraînement en rotation de l'arbre et en réduire la vitesse.

De préférence, l'ensemble réducteur de vitesse comprend un élément de boîtier, dans lequel est monté un simple train épicycloïdal ou un double train épicycloïdal.

Avantageusement, le double train épicycloïdal comprend :
- un premier train épicycloïdal comprenant un premier porte-satellites équipé de trois pignons satellites tournant autour d'une couronne à denture intérieure constituant un premier étage de réduction. Il est entraîné par le pignon solaire de l'arbre moteur.
- un second train épicycloïdal comprenant un porte-satellites équipé de trois pignons satellites tournant autour de la couronne constituant le second étage de réduction. Il est entraîné par un second pignon solaire emmanché en sortie du premier porte satellite.

Dans une forme de réalisation, le mécanisme de transmission comprend en entrée un palier et un pignon solaire comportant un axe, le palier étant fixé à la structure intérieure de la deuxième portion cylindrique du moyeu, l'arbre d'entrainement reposant dans le palier et étant relié de manière solidaire à l'axe du pignon solaire afin de recevoir le couple d'entrainement en rotation de l'agencement de moteur et entrainer ainsi les pignons satellites de l'ensemble réducteur de vitesse et donc l'organe de roulage par démultiplication de couple.

De préférence, le moyeu comporte des ailettes d'évacuation de la chaleur générée par l'agencement de moteur afin d'augmenter les performances de la motorisation, notamment de la puissance fournie par le moteur.

Selon un aspect de l'invention, le capteur est de type codeur rotatif et permet la commutation des phases du moteur sans balais et son asservissement en vitesse et position (système bouclé).

L'invention concerne également un ensemble directeur à double roue motorisée comprenant au moins deux roues motorisées telles que présentées précédemment, chaque roue étant apte à être pilotée indépendamment de l'autre roue afin de permettre de diriger ledit ensemble, notamment en rotation.

L'invention concerne également une plateforme mobile, notamment de manutention ou de déplacement, comprenant un bâti, au moins deux roues telles que présentées précédemment montées sur ledit bâti. La plateforme mobile selon l'invention permet de déplacer des objets ou des opérateurs dans un espace très restreint, notamment des charges lourdes, dont la masse est supérieure à 1 tonne. La compacité des roues permet à la plateforme de s'adapter aux environnements étroits et de pouvoir se glisser sous des équipements relativement bas.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La **figure 1** est une vue en perspective avant d'une forme de réalisation de la roue motorisée selon l'invention.
[Fig 2] La **figure 2** est une vue en perspective arrière de la roue de la figure 1.
[Fig 3] La **figure 3** est une vue en perspective du moyeu de la roue, le mécanisme de transmission étant visible en face avant.
[Fig 4] La **figure 4** est une vue en perspective de l'agencement de moteur de la roue.
[Fig 5] La **figure 5** est une vue en perspective de l'arbre de l'agencement de moteur de la roue.
[Fig 6] La **figure 6** est une vue en perspective de trois-quarts avant du mécanisme de transmission de la roue.
[Fig 7] La **figure 7** est une vue en perspective partielle de trois-quarts avant du mécanisme de transmission de la roue montrant l'intérieur du mécanisme.
[Fig 8] La **figure 8** est une vue en perspective partielle de trois-quarts arrière du mécanisme de transmission de la roue montrant l'intérieur du mécanisme, dépourvu du porte-satellites du premier étage par souci de clarté.
[Fig 9] La **figure 9** est une vue en perspective du moyeu de la roue, le mécanisme de transmission étant visible en face avant et les systèmes de roulement à billes étant montés autour de la deuxième portion cylindrique du moyeu.
[Fig 10] La **figure 10** est une vue en perspective de l'organe de roulage de la roue.
[Fig 11] La **figure 11** est une vue en coupe longitudinale de la roue.
[Fig 12] La **figure 12** est une vue en perspective d'une forme de réalisation d'un ensemble directeur à double roue motorisée selon l'invention.
[Fig 13] La **figure 13** est une vue en perspective de côté d'une forme de réalisation d'une plateforme selon l'invention.
[Fig 14] La **figure 14** est une vue en perspective de dessous de la plateforme de la figure 13.
[Fig 15] La **figure 15** est une vue en perspective d'une autre forme de réalisation d'une plateforme selon l'invention.

### [Description des modes de réalisation]

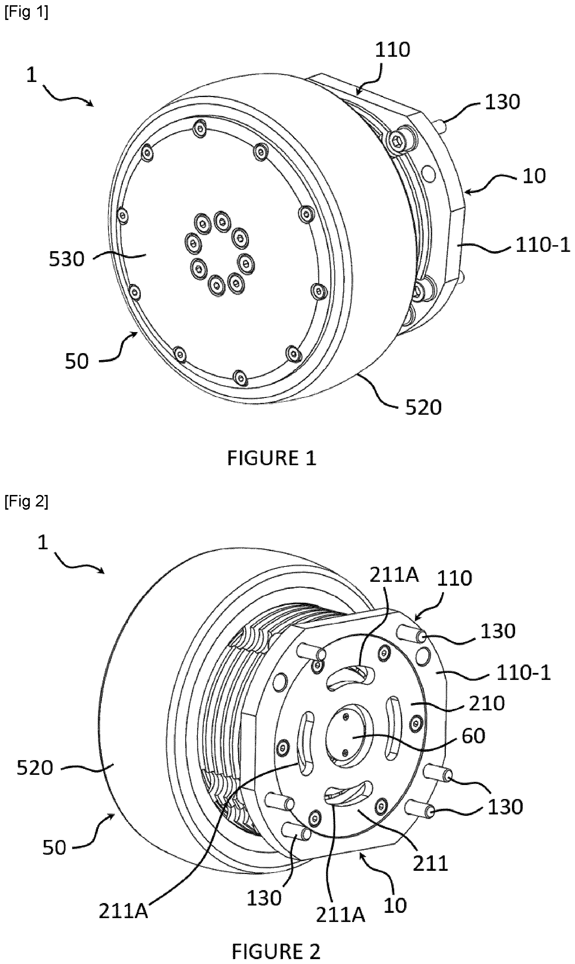

On a représenté sur les figures 1 et 2 un exemple de roue 1 motorisée selon l'invention. La roue 1 est destinée à être montée sur une plateforme mobile afin notamment de porter et déplacer des charges, notamment des charges lourdes pouvant aller de plusieurs centaines de kilogrammes à plusieurs tonnes.

### Roue 1

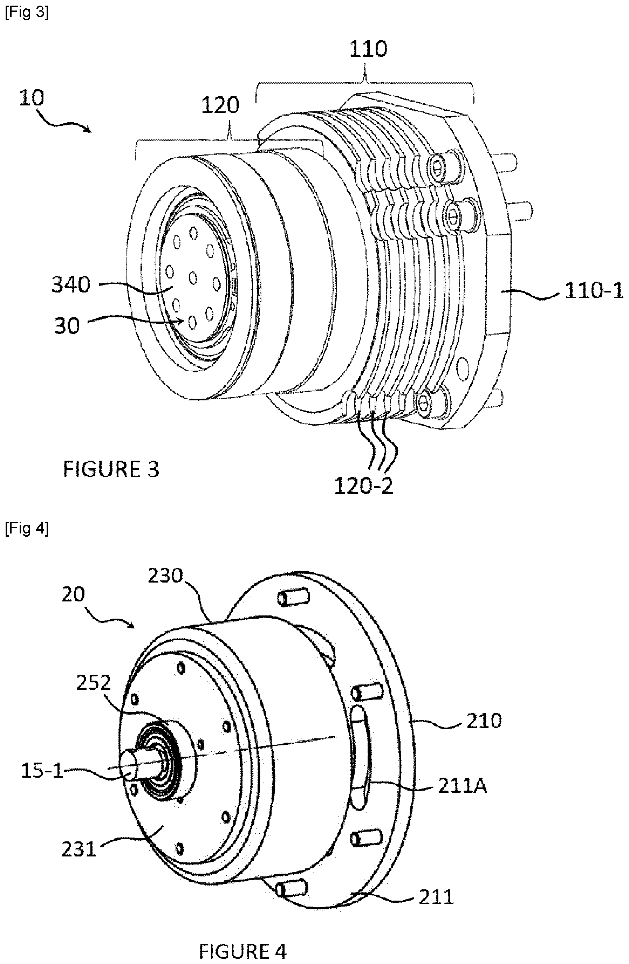

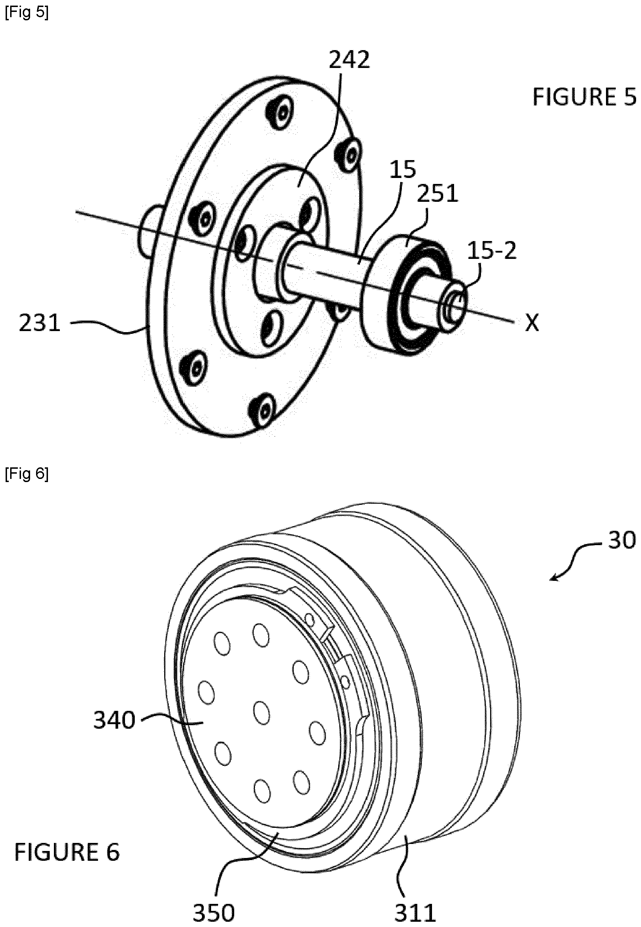

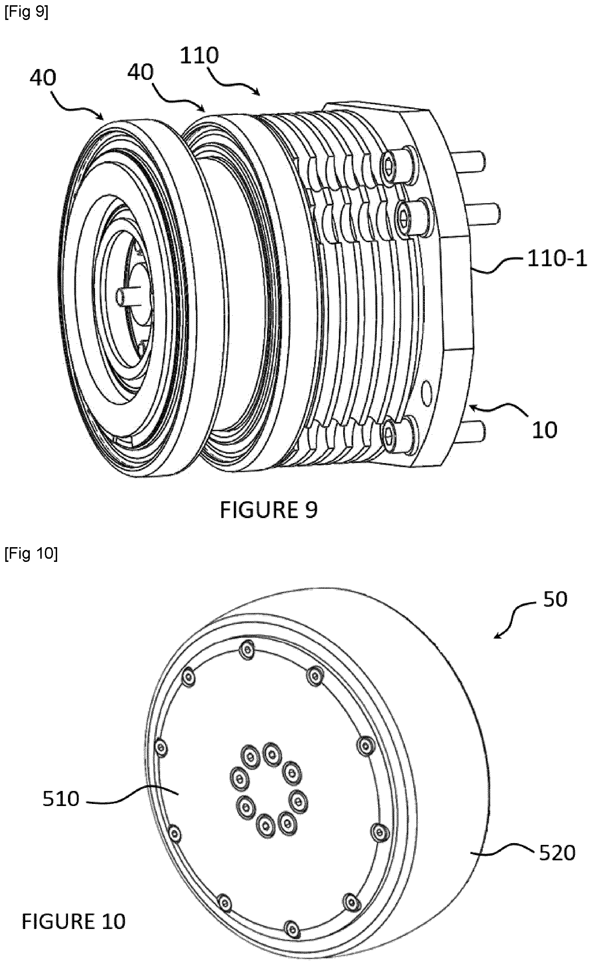

La roue 1 comprend tout d'abord un moyeu 10 et un agencement de moteur 20, visible sur la figure 4. La roue 1 comprend également un mécanisme de transmission 30, visible sur la figure 6, un système de guidage en rotation 40, visible sur la figure 9, et un organe de roulage 50, visible sur les figures 1 et 2. Dans cet exemple, la roue 1 comprend en outre un capteur 60 rotatif, visible sur la figure 2.

### Moyeu 10

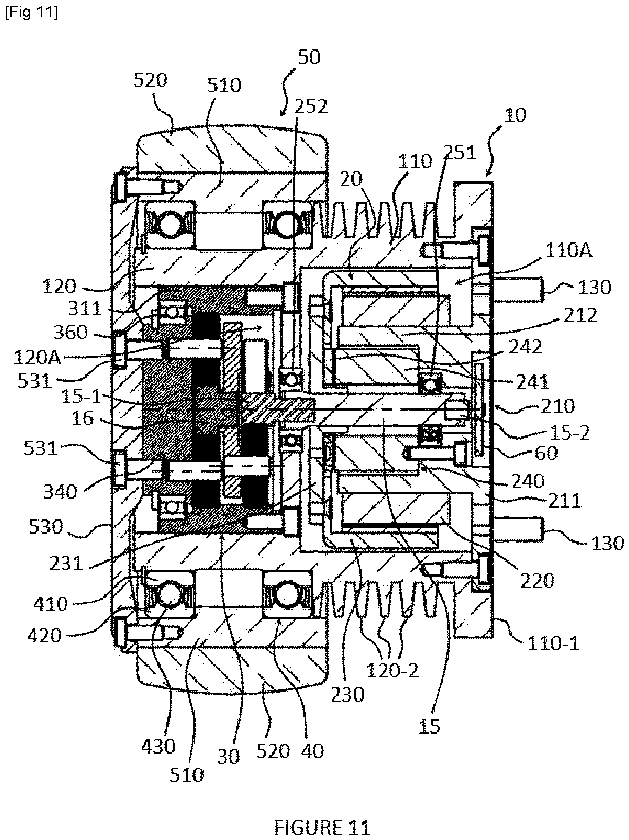

Le moyeu 10 se présente sous la forme d'une pièce métallique monobloc comprenant deux compartiments interne formés par un premier logement intérieur 110 et par un deuxième logement intérieur 120, tous deux de forme cylindrique et de même axe, c'est-à-dire agencés de manière coaxiale l'un par rapport à l'autre. En référence à la figure 11, le premier logement intérieur 110 délimite un premier espace 110A dans lequel est monté intégralement l'agencement de moteur 20 et le deuxième logement intérieur 120 délimite un deuxième espace 120A dans lequel est monté intégralement le mécanisme de transmission 30.

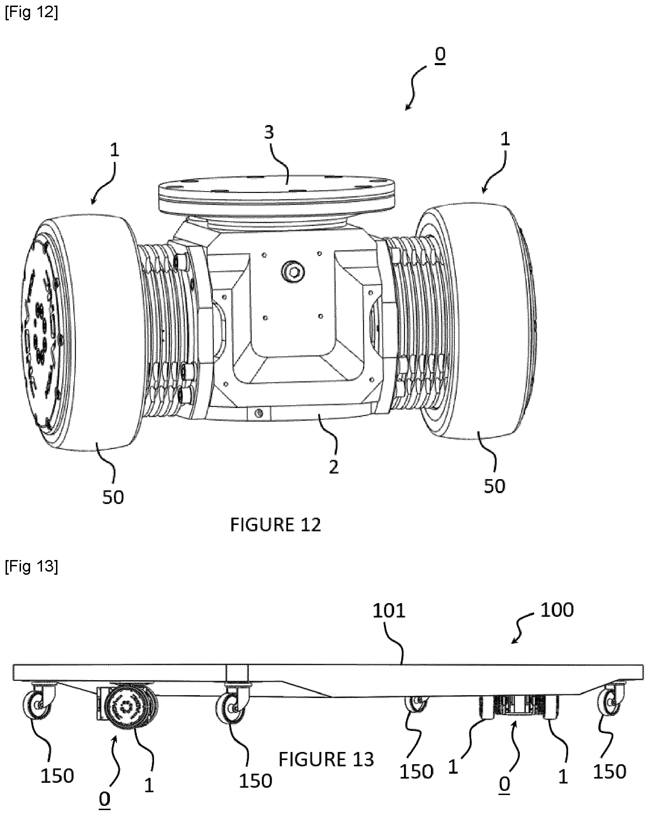

Comme illustré notamment sur les figures 1 à 3, l'extrémité libre de la première portion cylindrique 110 se présente sous la forme d'une bride de fixation 110-1. Cette bride de fixation 110-1 permet de fixer la roue 1 motorisée sur le bâti 2 d'une plateforme mobile ou d'un ensemble de roues moteur et directeur, comme illustré sur la figure 12. Dans cet exemple, le montage de la bride de fixation 110-1 est réalisé à l'aide d'une pluralité de vis de fixation 130, visibles notamment sur les figures 1 et 2.

En référence maintenant à la figure 3, la portion cylindrique 110 comporte également des ailettes 120-2 s'étendant radialement et permettant d'évacuer la chaleur générée par l'agencement de moteur 20.

### Agencement de moteur 20

En référence maintenant aux figures 4 et 5, l'agencement de moteur 20 comprend un moteur annulaire relié à un arbre d'entrainement 15 et adapté pour générer un couple d'entrainement en rotation dudit arbre 15.

Plus en détail, dans l'exemple des figures et en référence notamment à la figure 4, l'agencement de moteur 20 comprend un corps 210 de moteur (aussi visible sur la figure 2), un stator 220 annulaire (visible sur la figure 11), un rotor 230 annulaire, un organe de freinage 240 (visible sur la figure 11) et un arbre 15 (visible sur les figures 4 et 5).

Comme illustré sur la figure 4, le corps 210 se présente sous la forme d'une pièce métallique monobloc comprenant une embase 211 et une portion de support 212 (figure 11) cylindrique issue de matière de ladite embase 211. L'embase 211 présente la forme d'un disque comportant des ouvertures 211A (figure 2) qui permettent de dissiper la chaleur produite par le moteur vers l'extérieur. Avantageusement, le corps 210 comprend ou, de préférence, est constitué d'un matériau amagnétique afin de réduire les interférences entre le stator 220, le rotor 230 et l'organe de freinage 240.

Comme illustré sur la figure 5, l'arbre 15 s'étend selon un axe longitudinal X et comporte un premier palier 251 et un deuxième palier 252 (visible sur la figure 11) afin d'autoriser la rotation de l'arbre 15 dans le moyeu 10.

L'organe de freinage 240 comporte deux parties : une partie fixe (corps inducteur 241) et une partie tournante (un disque de frein 242), l'arbre d'entrainement 15 passant à travers le corps inducteur 241 sans le toucher (figure 11). L'organe de freinage 240 est intégralement monté à l'intérieur du premier logement intérieur 110 et dans l'épaisseur du moteur annulaire afin de rendre l'agencement de moteur 20 compacte.

Le capteur 60 (codeur rotatif) est monté à l'extrémité de l'arbre 15, comme illustré sur la figure 11, de manière à se trouver positionné sensiblement au centre de corps 210, comme illustré sur la figure 2. Le capteur 60 est configuré pour mesurer la vitesse et/ou la position de l'arbre 15, comme cela sera décrit ci-après.

En référence maintenant à la figure 11, le corps inducteur 241 présente une forme cylindrique et comporte un bobinage électromagnétique et un aimant permanent.

Toujours en référence à la figure 11, l'organe de freinage 240, l'arbre 15, le corps 210, le stator 220 et le rotor 230 sont montés de manière coaxiale. A cette fin, le stator 220 présente une forme annulaire et comporte une pluralité de bobinages électromagnétiques configurés pour recevoir un courant électrique afin de produire un champ électromagnétique permettant d'entrainer le rotor 230 en rotation. Ainsi, l'organe de freinage 240 est contenu dans l'espace intérieur du stator 220 afin de réduire la taille de l'agencement de moteur 20 et rendre ainsi la roue 1 compacte.

Le stator 220 et le rotor 230 sont agencés de sorte que le flux électromagnétique généré par le stator 220 et le rotor 230 en rotation n'interfère pas avec le flux électromagnétique généré par l'organe de freinage 240. Par exemple, l'ensemble stator 220 / rotor 230 peut être à flux radial et l'organe de freinage 240 à flux axial ou bien l'ensemble stator 220 / rotor 230 et l'organe de freinage 240 peuvent être tous deux à flux axial.

De préférence, l'ensemble stator 220 / rotor 230 et l'organe de freinage 240 sont séparés d'une distance d'au moins 5 mm afin d'éviter les interférences entre leurs champs électromagnétiques. De préférence encore, l'ensemble stator 220 / rotor 230 et l'organe de freinage 240 sont séparés du capteur 60 d'une distance d'au moins 10 mm afin d'éviter les interférences entre leurs champs électromagnétiques.

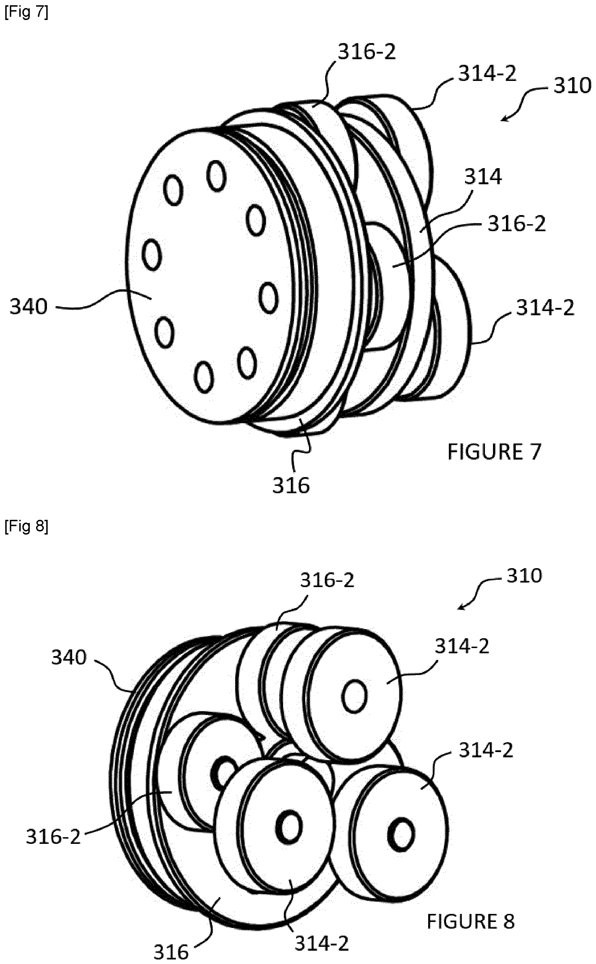

L'arbre 15 ne supporte pas d'effort extérieur en dehors de sa propre masse, de la masse du rotor 230 et des forces magnétiques à l'entrefer. L'arbre d'entrainement 15 intègre aussi un aimant 15-2 (figure 5) fixé sur son extrémité, entre l'arbre d'entrainement 15 et le capteur 60 afin de permettre au capteur 60 de fonctionner par effet Hall, de manière connue en soi. L'autre extrémité de l'arbre 15 est munie d'un pignon solaire 15-1 permettant d'entrainer le mécanisme de transmission 30. L'axe du pignon solaire 15-1 est fixé bout à bout avec l'arbre d'entrainement 15, par exemple par collage ou frettage, l'arbre d'entrainement 15 reposant dans le palier 252 (figure 11) et est relié de manière solidaire à l'arbre 15 de l'agencement de moteur 20 afin de recevoir le couple d'entrainement en rotation de l'agencement de moteur 20 et entrainer ainsi les différents pignons de l'ensemble réducteur de vitesse 310 (visible sur les figures 7 et 8) et donc l'organe de roulage 50 par réduction de vitesse. En d'autres termes, l'arbre 15 relie l'agencement de moteur 20 au mécanisme de transmission 30 afin de transmettre le mouvement de rotation du rotor 230 à l'ensemble réducteur de vitesse 310, l'arbre 15 transmettant la puissance mécanique à l'ensemble réducteur de vitesse 310 par l'intermédiaire de l'axe du pignon solaire 15-1.

En référence à la figure 11, le rotor 230 est de forme annulaire et est monté de manière mobile en rotation et coaxiale autour du stator 220. Le rotor 230 est relié solidairement à l'arbre 15 via un disque de rotor 231 afin de transmettre sa rotation au mécanisme de transmission 30. Le disque de rotor 231 peut être monté par frettage ou/et clavetage sur le rotor 230. L'arbre d'entrainement 15 est de préférence guidé par un montage de type palier semi-fixe ou palier libre préchargé, pour des raisons de montage et de simplicité.

On a représenté sur les différentes figures une forme préférée de réalisation de la roue 1. Cependant, d'autres architectures sont possibles dans le périmètre de la présente invention. Ainsi, par exemple, l'agencement de moteur 20 pourrait comprendre un rotor interne, le bobinage électromagnétique du stator, externe, étant alors fixé sur la paroi interne de la première portion cylindrique 110 du moyeu 10.

Le stator 220 et le rotor 230 forment un ensemble du type moteur sans balais ("brushless" en langue anglaise) dans lequel le rotor 230 est extérieur ("outrunner") et présente un très bon ratio volume/puissance/performance. Cet agencement annulaire permet de placer l'organe de freinage 240 électromagnétique directement à l'intérieur du stator 220.

Les moteurs « brushless » peuvent fonctionner sur les quatre quadrants, permettant d'assurer le freinage du système pour les arrêts normaux, et permettant notamment la recharge de batteries de la plateforme mobile de manutention. Mais en cas de défaillance, perte d'énergie ou lorsque la roue 1 n'est pas alimentée électriquement, il est indispensable d'avoir un système passif externe de freinage. Ceci est imposé par les directives CE et normes ISO applicables au monde industriel. Ce système de freinage remplit de préférence la fonction de "frein de parking" à l'arrêt sur une pente, et de "frein de service" lors d'un arrêt d'urgence (fonctionnement dynamique) ou en cas de perte d'énergie ou en cas de défaillance du freinage moteur durant les arrêts normaux. L'architecture spécifique de la roue 1 permet d'intégrer cette fonction à l'intérieur du stator 220 sans augmenter son encombrement.

Des câbles d'alimentation électrique (non visibles sur les figures) permettent d'alimenter des phases du moteur.

Le disque de frein 242 de l'organe de freinage 240 est fixé au disque de rotor 231 par l'intermédiaire d'une lame ressort (non représentée) souple axialement. Le bobinage de l'organe de freinage 240 est fixé à la portion de support 212 du corps 210. Le disque de frein 242 et le bobinage de l'organe de freinage 240 sont donc en rotation l'un par rapport à l'autre, de préférence avec un entrefer de 0,3 à 0,5 mm. De préférence, l'organe de freinage 240 est à manque d'énergie (frein positif) pour des raisons de sécurité.

De préférence, l'organe de freinage 240 est de type frein électromagnétique à aimants permanents ou à ressort. Dans le cas où l'organe de freinage 240 est de type à aimant permanent, le disque de frein 242 est freiné quand le bobinage de l'organe de freinage 240 n'est pas alimenté. Le disque de frein 242, monté sur la lame ressort, est alors attiré sur l'aimant permanent et bloque le système en rotation. Lorsque le bobinage de l'organe de freinage 240 est alimenté, son champ magnétique annule la force produite par l'aimant permanent. La lame ressort se relâche et le système est libre en rotation. Dans le cas où l'organe de freinage 240 est de type à ressort, l'aimant permanent est remplacé par des ressorts de compression. Le principe est le même.

Dans le cas d'une utilisation normale, le freinage est assuré par le moteur, ce qui permet de maîtriser parfaitement les rampes de décélération et donc les risques de glissement de la roue 1 au sol. Cela permet également de recharger les batteries le cas échéant.

De préférence, le freinage se déclenche lors d'une coupure d'énergie. De préférence encore, l'organe de freinage 240 peut être utilisé en frein de parking, en frein de sécurité ou en freinage d'urgence dynamique.

L'organe de freinage 240 permet d'assurer la bonne performance des fonctions de motorisation et de freinage dans un volume très réduit. De plus, le freinage électromagnétique, et non mécanique (tambour, frein à disque), réduit le nombre de pièces d'usure et améliore ainsi la sûreté et la longévité de la roue 1. L'organe de freinage 240 étant directement intégré à l'agencement de moteur 20, et donc en amont du mécanisme de transmission 30, permet de réduire fortement le couple nécessaire au freinage et donc de miniaturiser la fonction. Un tel organe de freinage 240 peut ajouter des contraintes de compatibilité magnétostatique et électromagnétique entre les divers composants (agencement de moteur 20, organe de freinage 240, capteur 60). Pour contenir le champ magnétique de l'organe de freinage 240, il est alors nécessaire de sélectionner des matériaux adaptés et de garantir une distance minimale de séparation pour le champ électromagnétique. Ainsi, de préférence, le corps 210 et le disque de rotor 231 sont en alliage d'aluminium amagnétique et l'arbre 15 est en acier inoxydable. Ces matériaux sont amagnétiques, créant ainsi un blindage magnétostatique. L'organe de freinage 240 est suffisamment éloigné de l'ensemble stator 220 et rotor 230 et du capteur 60 pour ne pas créer d'interférences électromagnétiques. L'organe de freinage 240 est alimenté électriquement via deux câbles d'alimentation (non visibles), traversant de préférence un orifice du corps de moteur 210.

Du fait de la compacité de la roue 1, la dissipation thermique est un enjeu majeur de l'intégration de l'agencement de moteur 20 et de sa performance. L'intégration d'éléments électromagnétiques (organe de freinage, moteur sans balais) dans un volume réduit entraîne une densité énergétique importante. Des pertes par effet joule (Rl²), pertes d'hystérésis, perte par courant de Foucault se produisent, se transformant directement en chaleur. La dissipation de cette énergie thermique est donc un enjeu majeur pour réduire les montées en température du système afin de garantir la durée de vie des composants (notamment de l'agencement de moteur 20, du mécanisme de transmission 30, des systèmes de roulement à billes 40 et du capteur 60) et d'utiliser pleinement la puissance moteur disponible. La température influe fortement sur les performances utiles de l'agencement de moteur 20 pouvant aller du simple au double. Les composants produisant de la chaleur sont le bobinage moteur et le bobinage du frein (alimenté en continu). La dissipation thermique de ces éléments vers l'extérieur se fait, d'une part, à travers tous les composants par conduction interne, par convection et par rayonnement externe et, d'autre part, par convection forcée à travers les dégagements du corps moteur. A cette fin, des matériaux en alliage d'aluminium présentant une très bonne conductivité thermique sont de préférence utilisés pour le moyeu 10 et le corps de moteur 210. Le rotor 230 et son disque de rotor 231 jouent le rôle de ventilateur pour dissiper la chaleur par les ouvertures 211A du corps de moteur 210. Les ailettes 120-2 sont optimisées pour augmenter au maximum la surface de convection et améliore ainsi la dissipation thermique qu'elle soit naturelle ou forcée.

### Mécanisme de transmission 30

Le mécanisme de transmission 30, illustré sur les figures 6 à 8, est monté dans le deuxième espace intérieur 120A du moyeu 10 et est entrainé par le pignon solaire 15-1 de l'arbre 15.

Le mécanisme de transmission 30 comprend un ensemble réducteur de vitesse 310 (visibles sur les figures 7 et 8) monté dans un boîtier 311 et adapté pour recevoir un couple d'entrainement en rotation de l'arbre 15 et en réduire la vitesse. En référence à la figure 6, le mécanisme de transmission 30 comprend un plateau de sortie 340 et un anneau d'arrêt 350 (par exemple de type circlip).

Comme illustré sur les figures 7 et 8, l'ensemble réducteur de vitesse 310 comprend un double train épicycloïdal comportant un premier étage et un deuxième étage.

Le premier étage de réduction comprend un porte-satellites 314, entrainé par le pignon solaire 15-1 de l'arbre 15, et trois pignons satellites 314-2 montés dans une couronne à denture intérieure montée dans le boitier 311, qui engrène avec les trois pignons satellites 314-2. La couronne à denture intérieure peut être taillée dans l'élément de boitier 311 ou rapportée, par exemple par frettage ou collage, sur l'élément de boitier 311.

Le deuxième étage comprend un porte-satellites 316 (figures 7 et 8) entrainé par un second pignon solaire 16 (figure 11) emmanché en sortie du premier porte-satellites 314, et trois pignons satellites 316-2 entrainés par la couronne à denture intérieure montée à l'intérieur du boitier 311. L'anneau élastique 350 permet le maintien de l'ensemble réducteur de vitesse 310 par l'intermédiaire d'un roulement 360 dans le boîtier 311.

En variante, l'ensemble réducteur de vitesse 310 pourrait être de type réducteur harmonique (engrenages à ondes de déformation) ou réducteur cycloïdal.

De préférence, le rapport de réduction de l'ensemble réducteur de vitesse 310 est compris entre 1:1 à 1:100. Dans cet exemple, l'ensemble réducteur de vitesse 310 comprend deux étages mais pourrait comprendre un seul ou plus de deux étages dans une autre forme de réalisation.

En variante encore, l'ensemble réducteur de vitesse 310 pourrait être dépourvu de boitier, la couronne étant directement frettée dans le moyeu.

La sortie du second porte-satellite 316 présente la forme d'un plateau de sortie 340 relié solidairement à la flasque de l'organe de roulage 50, comme décrit ci-après, de sorte à transmettre la puissance de l'agencement de moteur 20 à l'organe de roulage 50.

Le roulement à billes 360 (visible figure 11) permet la rotation et le maintien du deuxième étage du double train épicycloïdal dans l'élément de boîtier 311, et plus précisément du plateau de sortie 340.

### Système de guidage en rotation 40

Le système de guidage en rotation 40 est monté de manière mobile en rotation autour du deuxième logement 120. En référence à la figure 11, dans cet exemple, le système de guidage en rotation 40 comprend deux systèmes de roulement à billes radiaux et à gorge profonde comportant chacun une bague intérieure 410 montés autour de la deuxième portion cylindrique 120, une bague extérieure 420 et un ensemble de billes 430 monté entre la bague intérieure 410 et la bague extérieure 420 et maintenues par une cage à billes de sorte à former un roulement à billes. Les systèmes de roulement à billes comprennent des joints d'étanchéité (non visibles) permettant de protéger les éléments internes de la roue de la poussière et de l'eau. Un tel système de roulement à billes étant connu en soi, il ne sera pas détaillé davantage ici. En variante, le système de guidage en rotation 40 pourrait comprendre des roulements à rouleaux.

### Organe de roulage 50

L'organe de roulage 50 est monté de manière mobile en rotation sur les deux systèmes de roulement à billes 40, autour de la deuxième portion cylindrique 120 du moyeu 10 et du mécanisme de transmission 30.

En référence aux figures 10 et 11, l'organe de roulage 50 comprend une jante 510, un bandage 520 et une flasque 530. La flasque 530 est fixé au plateau de sortie 340 via des vis 531 afin de transmettre le mouvement de rotation en sortie du porte-satellites 316 du deuxième étage à l'organe de roulage 50 et est solidaire de la jante 510, également via des vis. La jante 510 est montée de manière mobile en rotation sur lesdits systèmes de roulement à billes 40. Le bandage 520 est monté sur la jante 510 et fait office de pneu afin de permettre le roulage de la roue 1 sur le sol. Cet agencement permet de réduire le porte-à-faux du moyeu 10 et donc de réaliser un moyeu 10 léger avec des matériaux à faibles résistance mécanique (type alliage d'aluminium).

Ainsi, le bandage 520 est guidé en rotation directement sur le moyeu 10 par l'intermédiaire des deux systèmes de roulements à billes 40 radiaux à gorge profonde. De ce fait, les efforts extérieurs (poids et force inertielles, chocs) sont directement repris par le moyeu 10 et ne sont pas transmis à l'ensemble réducteur de couple 310. Le positionnement des roulements radiaux à billes à gorge profonde entre la jante 510 et le moyeu 10 donne un avantage majeur au système. En effet, les efforts de roulage (force du sol sur la roue 1) sont directement transmis du bandage 520 au bâti 2 de la plateforme mobile par l'intermédiaire du moyeu 10. Aucun de ces efforts n'est alors transmis à l'ensemble réducteur de couple 310 réduisant ainsi son palier de sortie au minimum. Ce montage permet d'augmenter la charge admissible dans un encombrement ultra réduit.

Le bandage 520 de la roue 1 est un composant important puisque c'est le seul élément en contact avec le sol. Il garantit donc l'adhérence de la roue 1 avec le sol. Pour des applications industrielles sur sol bétonné ou sol bitumeux ou asphalte, le bandage 520 utilisé est réalisé de préférence en matière élastomère à base polyuréthane 90-95 SHA, ce qui permet de réduire fortement la résistance au roulement et donc la puissance nécessaire au roulage.

La forme spécifiquement bombée sur la largeur du bandage 520 permet de concentrer les forces de réactions du sol au centre de l'organe de roulage 50, réduisant ainsi la résistance au pivotement de l'ensemble et donc la puissance nécessaire aux changements brusques de direction lors de la prise de virage ou à l'arrêt dans le cas d'une roue 1 directionnelle.

La jante 510 étant démontable, il est facile d'adapter le type bandage 520 en fonction des usages ou pour des raisons de maintenance (usure). Le bandage 520 est réalisé en polyuréthane de préférence, pour sa grande capacité et sa faible résistance au roulement, ou en caoutchouc, pour protéger les sols, ou bien en polyamide, pour augmenter sa capacité sur des sols dur.

Dans d'autres formes de réalisation, la roue 1 pourrait comprendre un bandage double (deux jantes et deux bandages montés côte-à-côté parallèlement sur la deuxième portion cylindrique 120) avec l'un des organes de roulage monté en roue libre (roue folle). La variante à double bandage permet de reprendre une partie de la charge lorsque celle-ci est trop importante tout en réduisant fortement le diamètre de l'organe de roulage 50 mais aussi la résistance au pivotement.

### Capteur 60

Comme illustré sur les figures 2 et 11, le capteur 60 est monté sur l'extrémité libre de l'arbre 15 de manière concentrique au corps 210 et à l'embase 211.

Le capteur 60 est configuré pour déterminer l'orientation de l'arbre 15 et envoyer ses mesures à un module de contrôle de la plateforme mobile afin d'assurer le pilotage et l'asservissement de l'agencement de moteur 20.

De préférence, le capteur 60 est de type codeur rotatif magnétique à effet Hall et fonctionne en coopération électromagnétique avec un aimant 15-2, comme mentionné ci-avant. L'utilisation d'un codeur rotatif magnétique à effet Hall participe, de par sa faible taille et son fonctionnement en bout d'arbre d'entrainement 15, à la compacité de la roue 1.

En complément, un deuxième codeur de redondance peut être ajouté pour augmenter la sécurité nécessaire dans les systèmes de navigation autonome (contrôle et maitrise de position et de vitesse).

En variante, le capteur 60 pourrait être de type inductif ou optique.

On a représenté dans le tableau ci-après des exemples de valeurs ou de plages de valeurs pour différents paramètres de roue 1 tels que la capacité de charge, le diamètre de la roue, la profondeur, la masse, la vitesse au sol minimum, la vitesse sol maximum, le couple, la précision de positionnement et, la hauteur de marche et crevasse à franchir :

**[Table 1]**

| | | | | | | |
|---|---|---|---|---|---|---|
| Capacité de charge [kg] | 250 | 500 | 1 000 | 2 000 | 3 000 | 4 000 |
| Diamètre roue [mm] | 120 - 140 | 150 - 160 | 180 - 220 | 250 - 300 | 200 - 350 | 320 - 400 |
| Profondeur [mm] | 70 - 80 | 90 - 110 | 100 - 120 | 170 - 100 | 200 - 220 | 230 - 250 |
| Poids [kg] | < 3 | < 5 | < 10 | < 30 | < 40 | < 50 |
| Vitesse sol min [mm/s] | < 1 | < 1 | < 1 | < 1 | < 1 | < 1 |
| Vitesse sol max [km/h] | 2 - 6 | 2 - 6 | 2 - 6 | 2 - 6 | 2 - 6 | 2 - 6 |
| Couple peak [Nml | > 25 | > 50 | > 100 | > 250 | > 400 | > 600 |
| Précision de positionnement [mm] | < 1 | < 1 | < 1 | < 1 | < 1 | < 1 |
| Hauteur de marche et crevasse à franchir | 10 | 15 | 15 | 25 | 25 | 25 |

Par exemple, pour une puissance embarquée équivalente et une capacité de charge de 500 kg, les solutions existantes les plus compactes du marché présentent un diamètre de 200 mm et supérieure ou égale à 187,6 mm de profondeur.

La roue 1 selon l'invention permet de réaliser des machines d'assemblages complexes pourvues de plusieurs mouvements combinés et permettant l'assemblage de produits industriels.

La roue 1 selon l'invention permet d'obtenir un ratio capacité sur compacité inégalée qui la rend simple à intégrer. Elle s'adapte à des chariots existants sur roulette par exemple. La roue 1 selon l'invention permet également de réaliser des ensembles directeurs à double roues motrices à forte valeurs ajoutée.

### Ensemble directeur à double roue motorisée 0

On a représenté à la figure 12 un exemple d'un ensemble directeur à double roue motorisée à différentiel de vitesse pour plateforme mobile de manutention selon l'invention. Les roues 1 motorisées selon l'invention peuvent être intégrées de différentes manières.

Dans cet exemple, les roues 1 sont intégrées par paire sur un bâti 2, comme illustré sur la figure 12. Les deux roues 1 sont fixées en vis à vis sur le bâti 2 qui est munie d'un plateau rotatif 3.

Le bâti 2 intègre l'électronique nécessaire à l'asservissement en vitesse et position des roues (variateur et intelligence). Le bâti 2 comprend un module de contrôle (non représenté) permettant de commander les roues 1. Le bâti 2 peut également intégrer directement une source d'énergie électrique (batterie).

Le plateau rotatif 3 permet de relier l'ensemble directeur à double roue motorisée 0 à une plateforme mobile, notamment de manutention de charges ou de déplacement de personnes. Ce plateau rotatif 3 peut être guidé en rotation sur une chape articulée par un montage de roulement d'axe vertical (butée à aiguille et roulement ou bague radiale). Cette chape est de préférence articulée sur un axe horizontal afin de permettre la répartition uniforme de la charge portée par les roues 1.

En étant commandée indépendamment l'une de l'autre, les deux roues permettent de rendre l'ensemble à la fois moteur et directeur par différentiel de vitesse entre les deux roues. A cette fin, le plateau rotatif 3 intègre de préférence un capteur d'orientation qui permet d'asservir la vitesse et la position des roues motrices afin d'obtenir un ensemble directeur. Cette configuration permet notamment à l'ensemble directeur à double roue motorisée 0 de réaliser une autorotation (i.e. de tourner sur lui-même). Dans une forme de réalisation non illustrée, l'ensemble directeur à double roue motorisée 0 peut intégrer un système de levage monté à l'intérieur du bâti 2.

L'ensemble directeur à double roue motorisée 0 selon l'invention présente de nombreux avantages. Grâce à ses roues 1 compactes, l'ensemble directeur à double roue motorisée 0 est lui-même particulièrement compact en hauteur (hauteur proche à la hauteur de la roue) et en largeur par rapport aux solutions antérieures. L'ensemble directeur à double roue motorisée 0 présente en outre une traction importante du fait que chaque roue 1 comporte un agencement de moteur 20. L'ensemble directeur à double roue motorisée 0 présente ainsi peu de glissements lors des changements de directions grâce au différentiel de vitesse des deux roues 1. L'ensemble directeur à double roue motorisée 0 permet également une précision importante lors de son positionnement (pas de déplacement latéral de la charge) et peu d'usure. L'ensemble directeur à double roue motorisée 0 selon l'invention est particulièrement intéressant pour les applications de levage et déplacement de charge (AGV ou autre chariot motorisé).

Les ensembles directeurs à double roue motorisée 0 peuvent avantageusement être intégrés sur une plateforme mobile, notamment par combinaison de 1 à 8 roues. Tous les mouvements de translation et rotation combinés sont alors possibles. Un levage avec réglages de l'assiette (tangage et roulis) est également possible, par exemple en réalisant un système à six axes motorisés (trois translations et trois rotations). En ajoutant des roulettes stabilisatrices, une source d'énergie type batterie et un récepteur radio, on transforme ces roues 1 en véhicule autonome (robots de manutention collaboratif). Le développement de la roue motrice s'inscrit dans le contexte de l'industrie 4.0 car elle permet de déplacer des structures, outillages, produits ou machines industrielles en temps réel pour adapter rapidement et efficacement les lignes de production et les chaînes logistiques. Grâce à sa compacité, elle peut être intégrée soit sur des plateformes mobiles (AMR, AGV, SPMT) ou directement sur des machines spéciales ou des chariots de manutention. Dans ce contexte, les cas d'application possibles sont de manière non limitative : les solutions de transitique du produit sur les chaînes d'assemblage (poste à poste), le déplacement de moyens d'accès sur ligne d'assemblage, le déplacement de machines industrielles (machine-outil, machine spéciale), l'installation d'équipement dans un bâtiment (escalator, centrale chaud/froid).

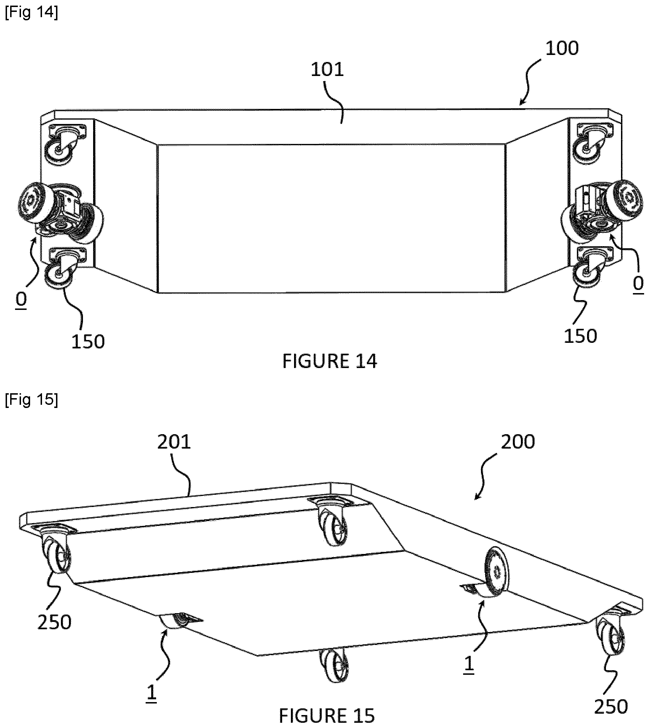

On a représenté sur les figures 13 et 14 un premier exemple de plateforme 100 selon l'invention. La plateforme 100 comprend un châssis 101, deux ensembles directeurs à double roue motorisée 0 identiques à celui de la figure 11, montés chacune de part et d'autre du châssis 101, et quatre roulettes 150 pivotantes stabilisatrices montées dans chacun des coins du châssis 101, ces quatre roulettes étant connues en soi. La plateforme 100 permet aussi bien les déplacements curvilignes, l'autorotation et les déplacements latéraux.

On a représenté sur la figure 15 un deuxième exemple de plateforme 200 selon l'invention. La plateforme 200 comprend un châssis 201, deux roues 1 motorisées, montées chacune de part et d'autre du châssis 201, et quatre roulettes 250 pivotantes stabilisatrices montées dans chacun des coins du châssis 201, ces quatre roulettes étant connues en soi. La plateforme 200 permet les déplacements curvilignes selon un axe figé qui est l'axe des deux roues motrices et l'autorotation.

## Revendications

1. Roue (1) motorisée pour plateforme mobile, ladite roue (1) comprenant :
- un moyeu (10) monobloc comprenant un premier logement (110) de forme cylindrique définissant un premier espace intérieur (110A) et un deuxième logement (120) de forme cylindrique s'étendant de manière coaxiale au premier logement (110) et définissant un deuxième espace intérieur (120A) communicant avec le premier espace intérieur (110A), le premier logement (110) étant adapté pour être fixé sur le bâti (2) de la plateforme mobile,
- un arbre d'entrainement (15) disposé de manière coaxiale avec le premier logement (110) et le deuxième logement (120),
- un agencement de moteur (20) logé dans ledit premier espace intérieur (110A), comprenant un moteur annulaire sans balais (210, 220, 230) relié audit arbre d'entrainement (15) et adapté pour générer un couple d'entrainement en rotation dudit arbre (15) et un organe de freinage (240), ledit moteur annulaire (20) comprenant un corps de moteur (210), un stator (220) de forme annulaire monté sur ledit corps de moteur (210) coaxialement par rapport à l'arbre d'entrainement (15) et comportant une pluralité de bobinages et un rotor (230) de forme cylindrique monté solidairement et coaxialement sur l'arbre (15) via un disque de rotor (231) de manière mobile par rapport au stator (220) afin d'entrainer l'arbre (15) en rotation lorsque les bobinages du stator (220) sont alimentés par un courant électrique, ledit organe de freinage (240) du rotor (230) étant monté autour de l'arbre d'entrainement (15) de manière coaxiale avec ledit arbre d'entrainement (15) à l'intérieur du moteur annulaire en étant contenu dans l'épaisseur de l'agencement de moteur (20),
- un capteur (60) monté sur le corps du moteur (210) et un aimant (15-2) monté sur l'extrémité de l'arbre (15), ledit capteur (60) étant configuré pour déterminer la position angulaire de l'arbre d'entrainement (15) à partir dudit aimant (15-2) afin de piloter la roue (1),
- un mécanisme de transmission (30) logé dans le deuxième espace intérieur (120A), relié solidairement à l'arbre (15) et comprenant un ensemble réducteur de vitesse (310) adapté pour recevoir le couple d'entrainement en rotation de l'arbre (15) afin d'en réduire la vitesse tout en en augmentant le couple,
- un système de guidage en rotation (40) monté de manière mobile en rotation autour du deuxième logement (120),
- au moins un organe de roulage (50) comprenant une jante (510) montée sur ledit système de guidage en rotation (40), un bandage (520) monté sur ladite jante (510) afin de permettre le roulage de la roue (1) sur le sol et un flasque (530) solidaire à la fois de la jante (510) et du mécanisme de transmission (30) afin de transmettre le couple augmenté reçu du mécanisme de transmission (30) à l'organe de roulage (50), la largeur de la jante et du bandage étant inférieure ou égale à la longueur du deuxième logement (120).

2. Roue (1) selon la revendication 1, dans laquelle le stator et le rotor sont agencés de sorte que le flux électromagnétique généré par le stator (220) et le rotor (230) en rotation n'interfère pas avec le flux électromagnétique généré par l'organe de freinage (240).

3. Roue (1) selon l'une quelconque des revendications précédentes, dans laquelle l'organe de freinage (240) est à aimant permanent.

4. Roue (1) selon l'une quelconque des revendications précédentes, dans laquelle l'agencement de moteur (20) comprend un rotor (230) externe et un stator (220) interne.

5. Roue (1) selon l'une quelconque des revendications précédentes, dans laquelle le mécanisme de transmission (30) comprend un ensemble réducteur de vitesse (310) adapté pour recevoir le couple d'entrainement en rotation de l'arbre (15) afin d'en réduire la vitesse tout en en augmentant le couple.

6. Roue (1) selon la revendication précédente, dans laquelle l'ensemble réducteur de vitesse (310) comprend un double train épicycloïdal comportant un premier étage et un deuxième étage, l'ensemble réducteur de vitesse (310) étant relié à l'arbre d'entrainement (15) via un pignon solaire (15-1).

7. Roue (1) selon l'une quelconque des revendications précédentes, dans laquelle le moyeu (10) comporte des ailettes (120-2) d'évacuation de chaleur générée par l'agencement de moteur.

8. Roue (1) selon l'une quelconque des revendications précédentes, dans laquelle le système de guidage en rotation comprend au moins un roulement à billes (40), de préférence deux roulements à billes (40), ou deux roulements à rouleaux.

9. Roue (1) selon l'une quelconque des revendications précédentes, dans laquelle le corps de moteur (210), le disque de rotor (231) et l'arbre d'entrainement (15) sont réalisés en un matériau amagnétique.

10. Ensemble de roue moteur et directeur (0) comprenant un bâti (2) et deux roues motrices (1) selon l'une des revendications précédentes montées sur ledit bâti (2).

## Patentansprüche

1. Motorisiertes Rad (1) für eine bewegliche Plattform, wobei das Rad (1) umfasst:
- eine einteilige Nabe (10), die eine erste zylindrisch geformte Aufnahme (110) umfasst, die einen ersten Innenraum (110A) definiert, und eine zweite zylindrisch geformte Aufnahme (120), die sich koaxial zur ersten Aufnahme (110) erstreckt und einen zweiten Innenraum (120A) definiert, der mit dem ersten Innenraum (110A) kommuniziert, wobei die erste Aufnahme (110) zur Befestigung auf dem Gestell (2) der beweglichen Plattform geeignet ist,
- eine Antriebswelle (15), die koaxial mit der ersten Aufnahme (110) und der zweiten Aufnahme (120) angeordnet ist,
- eine Motoranordnung (20), die im ersten Innenraum (110A) untergebracht ist, umfassend einen ringförmigen Motor ohne Bürsten (210, 220, 230), der mit der Antriebswelle (15) verbunden und geeignet ist, ein Rotationsantriebsmoment der Welle (15) zu erzeugen und ein Bremsorgan (240), wobei der ringförmige Motor (20) einen Motorkörper (210), einen ringförmig geformten Stator (220), der auf dem Motorkörper (210) koaxial im Verhältnis zur Antriebswelle (15) angebracht ist und eine Vielzahl von Wicklungen aufweist und einen zylindrisch geformten Rotor (230) umfasst, der über eine Rotorscheibe (231) beweglich im Verhältnis zum Stator (220) auf der Welle (15) fest verbunden und koaxial angebracht ist, um die Welle (15) rotatorisch anzutreiben, wenn die Wicklungen des Stators (220) mit einem elektrischen Strom versorgt werden, wobei das Bremsorgan (240) des Rotors (230) um die Antriebswelle (15) koaxial mit der Antriebswelle (15) im Inneren des ringförmigen Motors angebracht ist und dabei in der Dicke der Motoranordnung (20) enthalten ist,
- einen Sensor (60), der auf dem Körper des Motors (210) angebracht ist und einen Magnet (15-2), der auf dem Ende der Welle (15) angebracht ist, wobei der Sensor (60) ausgelegt ist, um die Winkelposition der Antriebswelle (15) ausgehend von dem Magnet (15-2) zu bestimmen, um das Rad (1) zu lenken,
- einen Übertragungsmechanismus (30), der in dem zweiten Innenraum (120A) untergebracht ist, der mit der Welle (15) fest verbunden ist und eine Drehzahlminderungsanordnung (310) umfasst, die zur Aufnahme des Rotationsantriebsmoments der Welle (15) geeignet ist, um deren Geschwindigkeit bei gleichzeitiger Erhöhung des Moments zu reduzieren,
- ein Rotationsführungssystem (40), das rotationsbeweglich um die zweite Aufnahme (120) angebracht ist,
- mindestens ein Rollorgan (50), das eine Felge (510) umfasst, die auf dem Rotationsführungssystem (40) angebracht ist, einen Reifen (520), der auf der Felge (510) angebracht ist, um das Rollen des Rades (1) auf dem Boden zu gestatten und einen Flansch (530), der sowohl mit der Felge (510) als auch mit dem Übertragungsmechanismus (30) fest verbunden ist, um das erhöhte, vom Übertragungsmechanismus (30) erhaltene Moment an das Rollorgan (50) zu übertragen, wobei die Breite der Felge und des Reifens kleiner oder gleich der Länge der zweiten Aufnahme (120) ist.

2. Rad (1) nach Anspruch 1, wobei der Stator und der Rotor derart eingerichtet sind, dass der vom Stator (220) und dem rotierenden Rotor (230) erzeugte elektromagnetische Strom nicht mit dem vom Bremsorgan (240) erzeugten elektromagnetischen Strom interferiert.

3. Rad (1) nach einem der vorangehenden Ansprüche, wobei das Bremsorgan (240) mit Dauermagnet ist.

4. Rad (1) nach einem der vorangehenden Ansprüche, wobei die Motoranordnung (20) einen externen Rotor (230) und einen internen Stator (220) umfasst.

5. Rad (1) nach einem der vorangehenden Ansprüche, wobei der Übertragungsmechanismus (30) eine Drehzahlminderungsanordnung (310) umfasst, die geeignet ist, das Rotationsantriebsmoment der Welle (15) zu empfangen, um die Geschwindigkeit bei gleichzeitiger Erhöhung des Moments zu reduzieren.

6. Rad (1) nach vorangehendem Anspruch, wobei die Drehzahlminderungsanordnung (310) ein Doppelplanetengetriebe umfasst, das eine erste Stufe und eine zweite Stufe aufweist, wobei die Drehzahlminderungsanordnung (310) mit der Antriebswelle (15) über ein Sonnenritzel (15-1) verbunden ist.

7. Rad (1) nach einem der vorangehenden Ansprüche, wobei die Nabe (10) Flügel (120-2) zur Ableitung von Wärme aufweist, die durch die Motoranordnung erzeugt wird.

8. Rad (1) nach einem der vorangehenden Ansprüche, wobei das Rotationsführungssystem mindestens ein Kugellager (40), vorzugsweise zwei Kugellager (40), oder zwei Wälzlager umfasst.

9. Rad (1) nach einem der vorangehenden Ansprüche, wobei der Motorkörper (210), die Rotorscheibe (231) und die Antriebswelle (15) aus einem amagnetischen Material hergestellt sind.

10. Antriebs- und Lenkradanordnung (0), umfassend ein Gestell (2) und zwei Antriebsräder (1) nach einem der vorangehenden Ansprüche, die auf dem Gestell (2) angebracht sind.

## Claims

1. A motor-driven wheel (1) for mobile platform, said wheel (1) comprising:
- a one-piece hub (10) comprising a first cylindrical-shaped housing (110) defining a first internal space (110A) and a second cylindrical-shaped housing (120) extending coaxially to the first housing (110) and defining a second internal space (120A) communicating with the first internal space (110A), the first housing (110) being adapted to be attached to the frame (2) of the mobile platform,
- a drive shaft (15) disposed coaxially with the first housing (110) and the second housing (120),
- a motor arrangement (20) housed in said first internal space (110A), comprising a brushless annular motor (210, 220, 230) connected to said drive shaft (15) and adapted to generate a torque for rotationally driving said shaft (15) and a braking member (240), said annular motor (20) comprising a motor body (210), an annular-shaped stator (220) mounted to said motor body (210) coaxially with respect to the drive shaft (15) and comprising a plurality of windings and a cylindrical-shaped rotor (230) integrally and coaxially mounted to the shaft (15) via a rotor disk (231) movably with respect to the stator (220) in order to rotatably drive the shaft (15) when the windings of the stator (220) are supplied with an electric current, said braking member (240) of the rotor (230) being mounted about the drive shaft (15) coaxially with said drive shaft (15) inside the annular motor being accommodated in the thickness of the motor arrangement (20),
- a sensor (60) mounted to the motor body (210) and a magnet (15-2) mounted to the end of the shaft (15), said sensor (60) being configured to determine angular position of the drive shaft (15) from said magnet (15-2) in order to control the wheel (1),
- a transmission mechanism (30) housed in the second internal space (120A), integrally connected to the shaft (15) and comprising a speed reducer assembly (310) adapted to receive the torque for rotationally driving the shaft (15) in order to reduce its speed while increasing the torque,
- a rotational guide system (40) rotatably mounted about the second housing (120),
- at least one rolling member (50) comprising a rim (510) mounted to said rotational guide system (40), a tire (520) mounted to said rim (510) in order to allow rolling of the wheel (1) on the ground and a flange (530) integral with both the rim (510) and the transmission mechanism (30) in order to transmit the increased torque received from the transmission mechanism (30) to the rolling member (50), the width of the rim and the tire being less than or equal to the length of the second housing (120).

2. The wheel (1) according to claim 1, wherein the stator and the rotor are arranged such that the electromagnetic flux generated by the rotating stator (220) and rotor (230) does not interfere with the electromagnetic flux generated by the braking member (240).

3. The wheel (1) according to any of the preceding claims, wherein the braking member (240) has permanent magnets.

4. The wheel (1) according to any of the preceding claims, wherein the motor arrangement (20) comprises an outer rotor (230) and an inner stator (220).

5. The wheel (1) according to any of the preceding claims, wherein the transmission mechanism (30) comprises a speed reducer assembly (310) adapted to receive the torque for rotationally driving the shaft (15) in order to reduce its speed while increasing the torque.

6. The wheel (1) according to the preceding claim, wherein the speed reducer assembly (310) comprises a double epicyclic gear train comprising a first stage and a second stage, the speed reducer assembly (310) being connected to the drive shaft (15) via a sun gear (15-1).

7. The wheel (1) according to any of the preceding claims, wherein the hub (10) comprises heat dissipation fins (120-2) for heat generated by the motor arrangement.

8. The wheel (1) according to any of the preceding claims, wherein the rotational guide system comprises at least one ball bearing (40), preferably two ball bearings (40), or two roller bearings.

9. The wheel (1) according to any of the preceding claims, wherein the motor body (210), the rotor disk (231) and the drive shaft (15) are made of a non-magnetic material.

10. A drive and steering wheel assembly (0) comprising a frame (2) and two drive wheels (1) according to one of the preceding claims mounted to said frame (2).
